Europäisches Patentamt

European Patent Office

Office européen des brevets

(19)

(11) Publication number: **0 022 674**
**B1**

# (12) EUROPEAN PATENT SPECIFICATION

(45) Date of publication of patent specification: **11.07.84**

(51) Int. Cl.³: **B 60 D 1/00**

(21) Application number: **80302366.2**

(22) Date of filing: **11.07.80**

(54) Flexible towing hitch.

(30) Priority: **12.07.79 AU 9564/79**

(43) Date of publication of application:
**21.01.81 Bulletin 81/3**

(45) Publication of the grant of the patent:
**11.07.84 Bulletin 84/28**

(84) Designated Contracting States:
**AT BE CH DE FR GB IT LI LU NL SE**

(56) References cited:
**FR - A - 783 461**
**FR - A - 2 223 975**
**US - A - 2 067 794**
**US - A - 3 223 435**
**US - A - 3 708 183**

(73) Proprietor: **LOVELL'S SPRINGS PTY. LTD.**
**199 Parramatta Road**
**Homebush New South Wales 2140 (AU)**

(72) Inventor: **Lovell, Robert**
**199 Parramatta Road**
**Homebush, New South Wales 2140 (AU)**
Inventor: **Vanos, Robert**
**199 Parramatta Road**
**Homebush, New South Wales 2140 (AU)**

(74) Representative: **Jukes, Herbert Lewis et al,**
**Swann, Elt & Company 31 Beaumont Street**
**Oxford OX1 2NP (GB)**

Courier Press, Leamington Spa, England.

# Description

The present invention relates to towing hitches and more particularly, though not exclusively, to flexible towing hitches.

Known towing hitches, of which the most common employ a pivot ball to engage a correspondingly shaped coupling on the vehicle to be towed, provide a pivotable but rigid towing system. It is a disadvantage of these known hitches and couplings that the combination thereof is relatively rigid and accordingly transmits shocks from the towed vehicle to the prime mover to which the towing hitch is affixed. These shock forces cause undue wear and damage to both vehicles.

A particular towing hitch is illustrated and described in US—A—3,223,435. This known hitch employs a spring which engages a towing force transmitting member. However, that hitch is restricted in its ability to stabilize the motion of a towing force transmitting member because only a single spring is employed, with the resulting assembly being generally complex in order to bias the towing force transmitting member to a predetermined position.

It is an object of the present invention to overcome or substantially ameliorate the above disadvantages.

With regard to the US—Patent above which already discloses a towing hitch, including:

a hollow housing having upper and lower generally horizontal plate members, said housing being fixed to a frame adapted to be attached to a vehicle;
a towing force transmitting member to which a towed vehicle is to be coupled;
a pivot attaching said member to said frame, thereby enabling said member to pivot about a generally horizontal axis through a predetermined angle and extend generally horizontally outwardly of said hollow housing; and a resilient assembly extending between said member and said frame so as to bias said member to a predetermined position relative to said housing, the present invention is characterised in that said assembly includes:
upper and lower resilient means both abutting said towing member with said upper resilient means extending toward said upper plate member and said lower resilient means extending toward said lower plate member; an upper restraining end plate and a lower restraining end plate for said resilient means, the upper restraining end plate being generally horizontally disposed and sandwiched between said upper resilient means and said upper plate member, and said lower restraining end plate being generally horizontally disposed and sandwiched between said lower resilient means and said lower plate member; and tensioning means extending between said upper and lower end plates, wherein said tensioning means applies compressive force to both said resilient means so as to place both said resilient means in compression thereby biasing said towing member to said predetermined position.

Said towing hitch of the present invention is optionally characterised in that both said resilient means are pads of resilient material, and have a central slot through which said towing member passes.

Said towing hitch of the present invention is further optionally characterised in that said resilient means are springs between which said towing member passes.

A preferred form of the present invention will now be described by way of example with reference to the accompanying drawings, in which:

Figure 1 is a plan view of a towing coupling;
Figure 2 is a sectioned side elevation of the coupling of Figure 1; and
Figure 3 is a sectioned side elevation of a modification of the coupling of Figure 1.

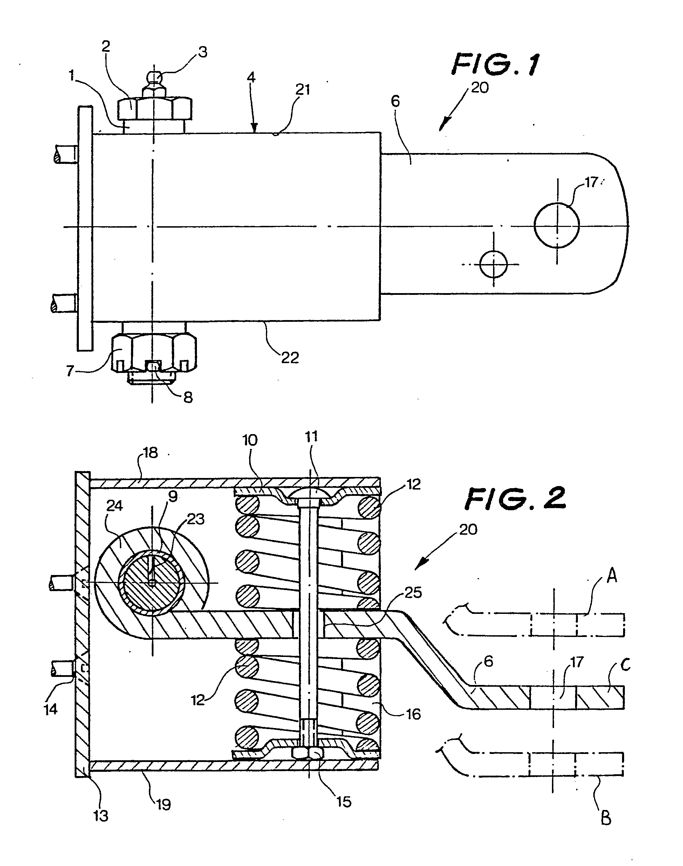

The towing hitch 20 depicted in Figures 1 and 2 is adapted to extend between a prime mover and a vehicle to be towed. It is further adapted to provide for a flexible coupling between the prime mover and the towed vehicle to allow relative vertical movement between the leading portion of the towed vehicle and the trailing portion of the prime mover in order to reduce the transmission of shock forces therebetween. The backing plate 13 is provided with two high tensile screws 14 to provide for the securing of the coupling 20 to the prime mover while there is also provided in the tongue 6, which transmits the towing force to the towed vehicle, a passage 17 to receive the shank of a tow-ball. A correspondingly shaped coupling on the towed vehicle is provided for attachment to the tow-ball. The coupling 20 further comprises a housing 4 which has upper and lower plate members 18 and 19 and side plate members 21 and 22. Extending between the side plate members 21 and 22, to pivotably couple the tongue 6 to the housing 4, is a high tensile bolt 2 and nut 7. The nut 7 is secured to the bolt 2 by split pin 8 to prevent relative rotation about the axis of bolt 2. Steel bushes 1 are located between the head of the bolt 2 and the nut 7 to provide additional bearing area of the bolt 2 and nut 7. The bolt 2 has an internal passage 23 which is closed by a grease nipple 3 to provide for the lubrication of the bearing surfaces of the tongue 6 and bolt 2. The tongue 6 has an end portion 24 of a generally annular cross-section encompassing a portion of the bolt 2, while there is provided around that portion a bush 9 to reduce wear.

Located within the housing 4 are two coil springs 12 which extend between end plates 10 which are held in position by bolt 11 and nut 15. The bolt 11 may be pre-tensioned so that the coil springs 12 are pre-stressed. The coil springs 12 are located above and below the tongue 6 and are adapted to bear against the upper and lower plate members 18 and 19 and the tongue 6 to resiliently bias the tongue 6 to the position C. The tongue 6 is provided with a passage 25 to allow the bolt 11 to pass therethrough. There is further provided within the housing 4 wear plates 16 which abut the side surfaces of the tongue 6 to prevent transverse movement of the tongue relative to the housing 4.

In operation the bolt 2 and springs 12 engage the tongue 6 so that it may pivot and move along a predetermined path between upper and lower positions A and B. The movement of the tongue along this predetermined path transfers to the springs 12 part of the shock forces applied to the tongue 6.

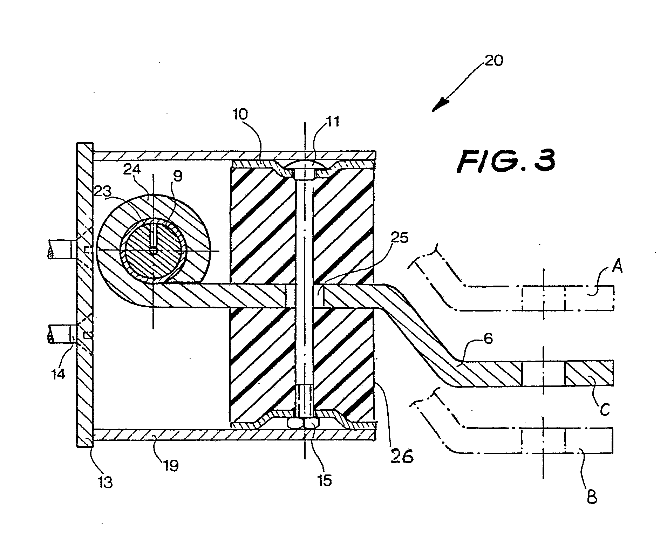

In Figure 3 the coupling 20 has been modified by replacing the spring 12 with a resilient pad 26. The pad 26 has a central slot to allow the tongue 6 to pass through it. Additionally, the pad has a passage to also allow the bolt 11 to pass through it.

## Claims

1. A towing hitch, including:

a hollow housing (4) having upper and lower generally horizontal plate members (18, 19), said housing being fixed to a frame adapted to be attached to a vehicle;

a towing force transmitting member (6) to which a towed vehicle is to be coupled;

a pivot (2, 7) attaching said member to said frame, thereby enabling said member to pivot about a generally horizontally axis through a predetermined angle and extend generally horizontally outwardly of said hollow housing and a resilient assemly (12, 26) extending between said number and said frame so as to bias said member to a predetermined position relative to said housing, characterised in that said assembly includes:

upper and lower resilient means (12, 26) both abutting said towing member with said upper resilient means extending toward said upper plate member and said lower resilient means extending toward said lower plate member;

an upper restraining end plate and a lower restraining end plate (10) for said resilient means, the upper restraining end plate being generally horizontally disposed and sandwiched between said upper resilient means and said upper plate member (18), and said lower restraining end plate being generally horizontally disposed and sandwiched between said lower resilient means and said lower plate member (19);

and tensioning means (11, 15) extending between said upper and lower end plates, wherein said tensioning means applies compressive force to both said resilient means so as to place both said resilient means in compression thereby biasing said towing member to said predetermined position.

2. The towing hitch of claim 1, characterized in that both said resilient means are pads (26) of resilient material, and have a central slot through which said towing member passes.

3. The towing hitch of claim 1, characterised in that said resilient means are springs (12) between which said towing member passes.

## Revendications

1. Dispositif d'attelage de remorque, comprenant:

un boîtier creux (4) comportant des plaques supérieures et inférieure (18, 19) généralement horizontales, ce boîtier étant fixé à un cadre destiné à être attaché à un véhicule;

un élément (6) detransmission de la force de remorquage, auquel un véhicule remorqué est destiné à être accouplé;

un pivot (2, 7) reliant cet élément audit cadre, ce qui permet à cet élément de pivoter dans un angle prédéterminé autour d'un axe généralement horizontal et de s'étendre, de façon généralement horizontale, à l'extérieur dudit boîtier creux;

et un ensemble élastique (12, 26) s'étendant entre ledit élément et ledit cadre de façon à solliciter ledit élément vers une position prédéterminée par rapport au boîtier; dispositif caractérisé en ce que ledit ensemble comprend:

des organes élastiques supérieur et inférieur (12, 26) affleurant tous deux ledit élément de remorquage, l'organe élastique supérieur s'étendant vers la plaque supérieure et l'organe élastique inférieur s'étendant vers la plaque inférieure;

une plaque extrême supérieure de retenue et une plaque extrême inférieure de retenue (10) des organes élastiques, la plaque extrême supérieure de retenue étant disposée de façon généralement horizontale et intercalée entre l'organe élastique supérieur et la plaque supérieure (18), et la plaque extrême inférieure de retenue étant disposée de façon généralement horizontale et intercalée entre l'organe élastique inférieur et la plaque inférieure (19);

et un organe tendeur (11, 15), qui s'étend entre lesdites plaques extrêmes supérieure et inférieure, et qui applique une force de compression aux deux organes élastiques de façon à placer ces deux organes élastiques en compression et à solliciter l'élément de transmission de la force de remorquage vers ladite position prédéterminée.

2. Dispositif d'attelage de remorque selon la revendication 1, caractérisé en ce que les organes élastiques sont des tampons (26) amortisseurs en une matière élastique, et comportent un trou débouchant central par lequel passe ledit élément de transmission de la force de remorquage.

3. Dispositif d'attelage de remorque selon la revendication 1, caractérisé en ce que les organes élastiques sont des ressorts (12) entre lesquels passe ledit élément de transmission de la force de remorquage.

**Patentansprüche**

1. Nachgiebige Zugvorrichtung mit einem hohlen Gehäuse (4) mit oberen und unteren im wesentlichen horizontalen Platten (18, 19), wobei das Gehäuse an einem Rahmen befestigt ist, der an einem Fahrzeug befestigbar ist; einem Zugkraft-Übertragungselement (6),

an welchem ein gezogenes Fahrzeug angekuppelt wird; einem Anlenkzapfen (2, 7), der dieses Element mit dem Rahmen verbindet, wodurch dieses Element um eine im wesentlichen horizontale Achse über einen vorgegebenen Winkel schwenken kann und sich im wesentlichen horizontal aswärts von dem hohlen Gehäuse erstreckt; einer elastischen Anordnung (12, 26) zwischen dem Element und dem Rahmen, um das Element in eine vorgegebene Position relativ zu dem Gehäuse vorzuspannen; dadurch gekennzeichnet, daß diese Anordnung folgendes umfaßt:

Obere und untere elastische Einrichtungen (12, 26), die beide an dem Zugelement anliegen, wobei die obere elastische Einrichtung sich zur oberen Platte erstreckt und die untere elastische Einrichtung sich zur unteren Platte erstreckt; eine obere und eine untere Halteplatte (10) für die elastischen Einrichtungen, wobei die obere Halteplatte im wesentlichen horizontal und zwischen der oberen elastischen Einrichtung und der oberen Platte (18) angeordnet ist, und die untere Halteplatte im wesentlichen horizontal und zwischen der unteren elastischen Einrichtung und der unteren Platte (19) angeordnet ist; Spanneinrichtungen (11, 15), die sich zwischen der oberen und unteren Halteplatte erstrecken, wobei diese Spanneinrichtungen eine Druckkraft auf beide elastischen Einrichtungen ausüben, um beide elastischen Einrichtungen unter Druck zu halten, wodurch das Zugelement in diese vorgegebene Position vorgespannt wird.

2. Nachgiebige Zugvorrichtung nach Anspruch 1, dadurch gekennzeichnet, daß beide elastischen Einrichtungen Puffer (26) aus elastischem Material sind und daß sie eine zentrale Durchgangsöffnung haben, durch welche sich das Zugelement erstreckt.

3. Nachgiebige Zugvorrichtung nach Anspruch 1, dadurch gekennzeichnet, daß die elastischen Einrichtungen Federn (12) sind, zwischen welchen sich das Zugelement erstreckt.

*FIG.1*

*FIG.2*

FIG. 3